# EUROPEAN PATENT SPECIFICATION

(11) **EP 4 071 876 B1**
(45) Date of publication and mention of the grant of the patent: **08.04.2026**
(21) Application number: 21744639.2
(22) Date of filing: 20.01.2021
(51) Int. Cl.: H01M 10/0565, H01M 50/449, H01M 50/403, H01M 50/414, H01M 50/44, H01M 50/443, H01M 50/46, H01M 10/0525, H01M 10/0564

(54) **SOLID-LIQUID HYBRID ELECTROLYTE MEMBRANE AND METHOD FOR MANUFACTURING THE SAME**
FEST-FLÜSSIG-HYBRID-ELEKTROLYTMEMBRAN UND METHODE ZU IHRER HERSTELLUNG
MEMBRANE ÉLECTROLYTIQUE HYBRIDE SOLIDE-LIQUIDE ET SA MÉTHODE DE FABRICATION

(30) Priority: 20.01.2020 KR 20200007480
(43) Date of publication of application: 12.10.2022
(73) Proprietor: LG Energy Solution, Ltd., Seoul 07335 (KR)
(72) Inventor: LEE, Jung-Pil, Daejeon 34122 (KR); LEE, Byoung-Sun, Daejeon 34122 (KR)
(74) Representative: Hoffmann Eitle
(86) International application number: PCT/KR2021/095029
(87) International publication number: WO 2021/150097

(56) References cited:
- JP-A- 2003 536 233
- JP-A- 2004 533 702
- JP-A- 2009 238 739
- KR-A- 20040 104 839
- US-A1- 2015 034 249
- US-A1- 2015 162 587
- US-A1- 2017 373 292

## Description

### TECHNICAL FIELD

The present application claims priority to Korean Patent Application No. 10-2020-0007480 filed on January 20, 2020 in the Republic of Korea. The present disclosure relates to a solid-liquid hybrid electrolyte membrane and a method for manufacturing the same.

### BACKGROUND ART

Importance of lithium secondary batteries has been increased, as use of vehicles, computers and portable terminals has been increased. Particularly, there is a high need for development of lithium secondary batteries having a low weight and providing a high energy density. The lithium secondary battery can be obtained by interposing a separator between a positive electrode and a negative electrode and injecting a liquid electrolyte thereto, or by interposing a solid electrolyte membrane between a positive electrode and a negative electrode.

However, in the case of a lithium ion battery using a liquid electrolyte, the negative electrode and the positive electrode are divided from each other by the separator. Therefore, when the separator is damaged by deformation or external impact, a short-circuit may occur, resulting in a risk, such as overheating or explosion.

On the contrary, a lithium secondary battery using a solid electrolyte is advantageous in that it has enhanced safety and prevents leakage of an electrolyte to improve the reliability of the battery. However, even though a solid electrolyte is used, there is still a need for development of a solid electrolyte membrane having high energy density and improved processability. **In** addition, in the case of a solid electrolyte, it has low ion conductivity to cause the problem of degradation of performance.

Further, such a solid electrolyte membrane shows a significantly larger thickness as compared to the thickness of a conventional porous polyolefin-based separator to cause loss of energy density. Under these circumstances, there is a need for a technical solution capable of overcoming the problems.

### DISCLOSURE

### Technical Problem

The present disclosure is designed to solve the problems of the related art, and therefore the present disclosure is directed to providing a solid-liquid hybrid electrolyte membrane which has a reduced thickness as compared to commercially available solid electrolyte membranes, while ensuring ion conductivity.

The present disclosure is also directed to providing a solid-liquid hybrid electrolyte membrane which has improved mechanical strength, even though it is a thinner film as compared to commercially available solid electrolyte membranes.

In addition, the present disclosure is directed to providing a solid-liquid hybrid electrolyte membrane which has improved energy density per weight based on the thickness, even though it is a thinner film as compared to commercially available solid electrolyte membranes.

Further, the present disclosure is directed to providing a method for manufacturing a solid-liquid hybrid electrolyte membrane which provides improved processability and an increased level of completion of products.

These and other objects and advantages of the present disclosure may be understood from the following detailed description. Also, it will be easily understood that the objects and advantages of the present disclosure may be realized by the means shown in the appended claims and combinations thereof.

### Technical Solution

In one aspect of the present disclosure, there is provided a method for manufacturing a solid-liquid hybrid electrolyte membrane according to any one of the following embodiments.

According to the first embodiment of the present disclosure, there is provided a method for manufacturing a solid-liquid hybrid electrolyte membrane, including the steps of: (S1) preparing a dispersion containing a plurality of polymer particles dispersed in a liquid electrolyte and a volatile organic solvent;
(S2) applying the dispersion onto a substrate, followed by drying, to form a porous structure; and
(S3) pressurizing the porous structure to obtain a solid-liquid hybrid electrolyte membrane,
wherein the solid polymer particles in the porous structure are packed, while being in contact with one another, and the porous structure includes a pore structure formed among the solid polymer particles,
the liquid electrolyte surrounds the inside of the pores of the porous structure, the portions in which the solid polymer particles are in surface contact with one another, or the surfaces of the solid polymer particles,
the content of the liquid electrolyte is 1-20 wt% based on the total weight of the solid-liquid hybrid electrolyte membrane, and
the organic solvent has higher volatility as compared to the liquid electrolyte.

According to the second embodiment of the present disclosure, there is provided the method for manufacturing a solid-liquid hybrid electrolyte membrane as defined in the first embodiment, wherein the volatile organic solvent has a boiling point of 30-200°C.

According to the third embodiment of the present disclosure, there is provided the method for manufacturing a solid-liquid hybrid electrolyte membrane as defined in the first or the second embodiment, wherein the volatile organic solvent includes acrylonitrile, methyl ethyl ketone, acetone, tetrahydrofuran, pentane, hexane, benzene, chloroform, diethyl ether, dichloromethane, ethyl acetate, acetonitrile, methanol, methylene chloride, carbon disulfide, carbon tetrachloride, or a mixture of two or more of them.

According to the fourth embodiment of the present disclosure, there is provided the method for manufacturing a solid-liquid hybrid electrolyte membrane as defined in any one of the first to the third embodiments, wherein the solid polymer particle is an engineering plastic resin.

According to the fifth embodiment of the present disclosure, there is provided the method for manufacturing a solid-liquid hybrid electrolyte membrane as defined in any one of the first to the fourth embodiments, wherein the solid polymer particle includes any one selected from polyphenylene sulfide, polyetherether ketone, polyimide, polyamideimide, liquid crystal polymer, polyether imide, polysulfone, polyarylate, polyethylene terephthalate, polybutylene terephthalate, polyoxymethylene, polycarbonate, polypropylene, polyethylene and polymethyl methacrylate, or two or more of them.

According to the sixth embodiment of the present disclosure, there is provided the method for manufacturing a solid-liquid hybrid electrolyte membrane as defined in any one of the first to the fifth embodiments, wherein the liquid electrolyte includes at least one of a linear carbonate, a linear ester and a linear ether, as an organic solvent, and a metal cation as a lithium salt.

According to the seventh embodiment of the present disclosure, there is provided the method for manufacturing a solid-liquid hybrid electrolyte membrane as defined in any one of the first to the sixth embodiments, wherein the weight ratio of the volatile organic solvent to the liquid electrolyte is 83:17-66:34.

According to the eighth embodiment of the present disclosure, there is provided the method for manufacturing a solid-liquid hybrid electrolyte membrane as defined in any one of the first to the seventh embodiments, wherein the pressurization in step (S3) is a step of allowing the solid polymer particles to be bound physically or chemically with one another to obtain a porous structure having a pore structure formed among the solid polymer particles.

According to the ninth embodiment of the present disclosure, there is provided the method for manufacturing a solid-liquid hybrid electrolyte membrane as defined in any one of the first to the eighth embodiments, wherein the substrate includes a porous polymer substrate or a non-woven web substrate.

According to the tenth embodiment of the present disclosure, there is provided the method for manufacturing a solid-liquid hybrid electrolyte membrane as defined in any one of the first to the ninth embodiments, wherein the pores inside of the substrate are filled with the liquid electrolyte.

According to the eleventh embodiment of the present disclosure, there is provided a solid-liquid hybrid electrolyte membrane, which includes a plurality of solid polymer particles and a liquid electrolyte,
wherein the solid polymer particles are packed, while being in contact with one another, and include a porous structure having a pore structure formed among the solid polymer particles,
the liquid electrolyte surrounds the inside of the pores of the porous structure, the portions in which the solid polymer particles are in surface contact with one another, or the surfaces of the solid polymer particles, and
the content of the liquid electrolyte is 1-20 wt% based on the total weight of the solid-liquid hybrid electrolyte membrane.

According to the twelfth embodiment of the present disclosure, there is provided the solid-liquid hybrid electrolyte membrane as defined in the eleventh embodiment, which further includes a porous polymer substrate or a non-woven web substrate.

According to the thirteenth embodiment of the present disclosure, there is provided the solid-liquid hybrid electrolyte membrane as defined in the eleventh or the twelfth embodiment, wherein the pores inside of the substrate are filled with the liquid electrolyte.

According to the fourteenth embodiment of the present disclosure, there is provided a lithium ion secondary battery including a positive electrode, a negative electrode and a solid-liquid hybrid electrolyte membrane interposed between the negative electrode and the positive electrode, wherein the solid-liquid hybrid electrolyte membrane is the same as defined in any one the eleventh to the thirteenth embodiments, and the negative electrode, the positive electrode or both include a solid electrolyte material.

### Advantageous Effects

According to an embodiment of the present disclosure, it is possible to obtain a deformable solid-liquid hybrid electrolyte membrane by using solid polymer particles instead of inorganic particles.

In addition, since a particle-shaped polymer capable of being compressed is used, it is possible to provide a solid-liquid hybrid electrolyte membrane having improved mechanical strength. And, since no solid electrolyte is used, it is possible to provide a solid-liquid hybrid electrolyte membrane which can be deformed by external pressurization. Further, the polymer particles are bound physically with one another, which is favorable to porosity and pore channel formation.

According to an embodiment of the present disclosure, since no binder polymer is used, it is possible to provide a solid-liquid hybrid electrolyte membrane showing low resistance.

Meanwhile, according to an embodiment of the present disclosure, a small amount of liquid electrolyte is used to ensure improved ion conductivity as compared to conventional solid electrolyte batteries, while preventing electrolyte leakage.

In addition, it is possible to provide a solid-liquid hybrid electrolyte membrane having improved energy density per weight based on the thickness.

Further, it is possible to provide a method for manufacturing a solid-liquid hybrid electrolyte membrane which provides improved processability and an increased level of completion of products.

### DESCRIPTION OF DRAWINGS

The accompanying drawings illustrate a preferred embodiment of the present disclosure and together with the foregoing disclosure, serve to provide further understanding of the technical features of the present disclosure, and thus, the present disclosure is not construed as being limited to the drawing. Meanwhile, shapes, sizes, scales or proportions of some constitutional elements in the drawings may be exaggerated for the purpose of clearer description.

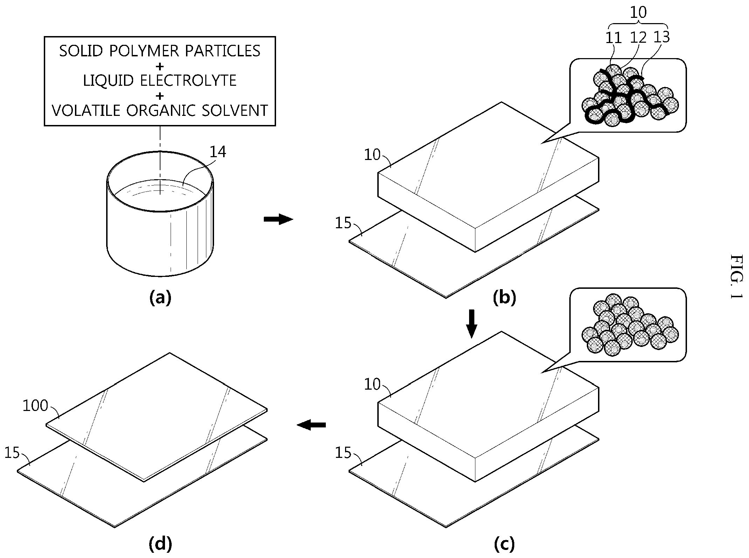

FIG. 1 is a schematic view illustrating the method for manufacturing a solid-liquid hybrid electrolyte membrane according to an embodiment of the present disclosure.

### BEST MODE

Hereinafter, preferred embodiments of the present disclosure will be described in detail with reference to the accompanying drawings. Prior to the description, it should be understood that the terms used in the specification and the appended claims should not be construed as limited to general and dictionary meanings, but interpreted based on the meanings and concepts corresponding to technical aspects of the present disclosure on the basis of the principle that the inventor is allowed to define terms appropriately for the best explanation. Therefore, the description proposed herein is just a preferable example for the purpose of illustrations only, not intended to limit the scope of the disclosure, so it should be understood that other equivalents and modifications could be made thereto without departing from the scope of the disclosure.

Throughout the specification, the expression 'a part includes an element' does not preclude the presence of any additional elements but means that the part may further include the other elements, unless otherwise stated.

As used herein, the terms 'approximately', 'substantially', or the like, are used as meaning contiguous from or to the stated numerical value, when an acceptable preparation and material error unique to the stated meaning is suggested, and are used for the purpose of preventing an unconscientious invader from unduly using the stated disclosure including an accurate or absolute numerical value provided to help understanding of the present disclosure.

As used herein, the expression 'A and/or B' means 'A, B or both of them'.

Specific terms used in the following description are for illustrative purposes and are not limiting. Such terms as 'right', 'left', 'top surface' and 'bottom surface' show the directions in the drawings to which they are referred. Such terms as 'inwardly' and 'outwardly' show the direction toward the geometrical center of the corresponding apparatus, system and members thereof and the direction away from the same, respectively. 'Front', 'rear', 'top' and 'bottom' and related words and expressions show the positions and points in the drawings to which they are referred and should not be limiting. Such terms include the above-listed words, derivatives thereof and words having similar meanings.

The present disclosure relates to a solid-liquid hybrid electrolyte membrane and a method for manufacturing the same.

In one aspect of the present disclosure, there is provided there a solid-liquid hybrid electrolyte membrane including a plurality of solid polymer particles and a small amount of liquid electrolyte. Herein, the liquid electrolyte covers the portions in which the solid polymer particles are in surface contact with one another, or the surfaces of the solid polymer particles, and the amount of the liquid electrolyte used herein is small. Therefore, even when the solid-liquid hybrid electrolyte membrane is subjected to pressurization during the manufacture thereof, there is no leakage of the liquid electrolyte, and the solid-liquid hybrid electrolyte membrane provides an ion conductivity equivalent to or similar to the ion conductivity of conventional solid electrolyte membranes and shows uniform ion conductivity.

In the solid-liquid hybrid electrolyte membrane, the solid polymer particles are packed, while being in contact with one another, and a small amount of liquid electrolyte is introduced into a pore channel formed by the solid polymer particles or the liquid electrolyte covers the portions in which the solid polymer particles are in surface contact with one another, or the surfaces of the solid polymer particles.

The solid-liquid hybrid electrolyte membrane is deformable by using polymer particles instead of inorganic particles, and can be deformed by external pressurization by using polymer particles instead of a solid electrolyte. In addition, the solid polymer particles are bound physically with one another, which is favorable to porosity and pore channel formation.

Meanwhile, since the solid-liquid hybrid electrolyte membrane includes a small amount of liquid electrolyte, it is possible to prevent electrolyte leakage, while ensuring improved ion conductivity as compared to conventional solid electrolyte membranes.

The solid-liquid hybrid electrolyte membrane may be obtained by coating a porous structure formed by packing solid polymer particles with a small amount of liquid electrolyte.

The present inventors have conducted intensive studies to obtain the solid-liquid hybrid electrolyte membrane, and particularly, to develop a solid-liquid hybrid electrolyte membrane having high energy density per weight based on the thickness.

A thin-film type solid-liquid hybrid electrolyte membrane may be obtained by forming a thick film, first, by using a porous structure formed by solid polymer particles, and then carrying out pressurization to obtain a thin film.

However, in order to obtain a thin-film type electrolyte membrane, the porous structure should retain its solid state, i.e. shape, even after the formation thereof, while a dispersion applied onto a substrate for forming a porous structure should retain its flowability during the application.

To solve the above-mentioned problem, a solvent having higher volatility as compared to a liquid electrolyte is further used according to the present disclosure, thereby providing a thin-film type solid-liquid hybrid electrolyte membrane.

FIG. 1 is a schematic view illustrating the method for manufacturing a solid-liquid hybrid electrolyte membrane according to an embodiment of the present disclosure. Hereinafter, the present disclosure will be explained in more detail with reference to the accompanying drawing.

Referring to FIG. 1(a), a dispersion 14 containing a plurality of solid polymer particles 11 dispersed in a liquid electrolyte 12 and a volatile organic solvent 13 is prepared (S1).

The solid polymer particle 11 is present in a solid state at room temperature, and is a polymer material having low solubility to the electrolyte.

Meanwhile, according to the present disclosure, the solid polymer particles are surrounded with the liquid electrolyte, and preferably have low solubility to the liquid electrolyte. In addition, the solid polymer particle is a polymer having excellent chemical resistance, preferably.

Particularly, the solid polymer particles have a solubility of less than 30 wt% at 20-30°C, when being impregnated with a liquid electrolyte or an organic solvent that may be used as an ingredient of a liquid electrolyte, such as ethylene carbonate : ethyl methyl carbonate = 30 : 70 (vol%). More particularly, the solid polymer particles may have a solubility of less than 20%, less than 15%, or less than 10%. Therefore, the solid polymer particles may be present in a solid state, even when they are dispersed in a solvent.

Particularly, the solid polymer particle may be an engineering plastic resin.

Herein, the engineering plastic resin may include any one selected from polyphenylene sulfide (PPS), polyetherether ketone, polyimide, polyamideimide, liquid crystal polymer, polyether imide, polysulfone, polyarylate, polyethylene terephthalate, polybutylene terephthalate, polyoxymethylene, polycarbonate, polypropylene, polyethylene and polymethyl methacrylate, or two or more of them.

Herein, the engineering plastic resin may have a molecular weight of 100,000-10,000,000 Da.

The solid polymer particles have compressibility, unlike the conventional commercially available inorganic particles. Therefore, it is possible to provide a lithium secondary battery having increased energy density per weight based on the thickness. In addition, it is possible to provide a deformable solid-liquid hybrid electrolyte membrane by using solid polymer particles instead of the conventional solid electrolyte. The solid polymer particles have ductility, and thus can be adhered, bound or interconnected physically or chemically under pressurization or heating. As a result, the solid-liquid hybrid electrolyte membrane according to the present disclosure requires no separate binder polymer. In other words, the solid-liquid hybrid electrolyte membrane is free of a binder polymer. Therefore, it is possible to provide a solid-liquid hybrid electrolyte membrane showing reduced resistance.

For example, the solid polymer particles may have an average particle diameter of 100 nm to 20 µm, 100 nm to 10 µm, 200 nm to 5 µm, or 500 nm to 2 µm. When the solid polymer particles have a particle diameter controlled within the above-defined range, it is possible to obtain a suitable pore size, to prevent a short-circuit, and to allow sufficient impregnation with the liquid electrolyte.

The liquid electrolyte is present in the portions in which the solid polymer particles are in surface contact with one another, or surrounds the surfaces of the solid polymer particles. In other words, all or at least part of the surfaces of the solid polymer particles may be coated with the liquid electrolyte.

Since the liquid electrolyte is present as mentioned above, it is possible to provide a solid-liquid hybrid electrolyte membrane having high ion conductivity.

According to an embodiment of the present disclosure, the liquid electrolyte cannot dissolve the solid polymer particles and has excellent chemical resistance and electrochemical resistance.

For example, the liquid electrolyte is a salt having a structure of A⁺B⁻, wherein A⁺ includes an alkali metal cation such as Li⁺, Na⁺, K⁺ or a combination thereof, and B⁻ includes an anion such as PF₆⁻, BF₄⁻, Cl⁻, Br⁻, I⁻, ClO₄⁻, AsF₆⁻, CH₃CO₂⁻, CF₃SO₃⁻, N(CF₃SO₂)₂⁻, C(CF₂SO₂)₃⁻ or a combination thereof, wherein the salt may be dissolved or dissociated in an organic solvent, such as propylene carbonate (PC), ethylene carbonate (EC), diethyl carbonate (DEC), dimethyl carbonate (DMC), dipropyl carbonate (DPC), dimethyl sulfoxide, acetonitrile, dimethoxyethane, diethoxyethane, tetrahydrofuran, N-methyl-2-pyrrolidone (NMP), ethyl methyl carbonate (EMC), gamma-butyrolactone (γ-butyrolactone) or a mixture thereof, but is not limited thereto.

According to the present disclosure, the volatile organic solvent has higher volatility as compared to the liquid electrolyte. In other words, the volatile organic solvent is a factor which evaporates rapidly after coating the dispersion on the substrate as described hereinafter, while ensuring the flowability of the dispersion, and thus assists formation of a porous structure.

Therefore, the volatile organic solvent may have a boiling point of 30-200°C, 40-150°C, or 50-100°C.

In addition, the volatile organic solvent may have a boiling point lower than the boiling point of the liquid electrolyte used in the dispersion by 5-100°C, 10-90°C, or 30-80°C.

In addition, the volatile organic solvent may have a vapor pressure higher than the vapor pressure of the liquid electrolyte by 10-10000%, 20-1000%, or 50-500%.

In addition, the volatile organic solvent cannot dissolve the solid polymer particles and has excellent chemical resistance and electrochemical resistance.

According to an embodiment of the present disclosure, the volatile organic solvent may include acrylonitrile, methyl ethyl ketone, acetone, tetrahydrofuran, pentane, hexane, benzene, chloroform, diethyl ether, dichloromethane, ethyl acetate, acetonitrile, methanol, methylene chloride, carbon disulfide, carbon tetrachloride, or a mixture of two or more of them.

Herein, the weight ratio of the liquid electrolyte to the volatile organic solvent may be 83:17-66:34, 50:50-34:66, or 17:83-9:91. When the weight ratio of the liquid electrolyte to the volatile organic solvent falls within the above-defined range, a post-process, such as roll pressing, may be carried out advantageously, after applying the dispersion onto the substrate, and the resultant solid-liquid hybrid electrolyte membrane shows an adequate level of ion conductivity.

Next, as shown in FIG. 1(b), the dispersion 14 is applied onto a substrate 15, followed by drying, to form a porous structure (S2).

Herein, the method for applying the dispersion onto a substrate may be any method used conventionally in the art. For example, the method may include dip coating, spray coating or drop coating.

In addition, the method for drying the dispersion may be any method used conventionally in the art with no particular limitation.

However, it is preferred that the liquid electrolyte in the dispersion does not evaporate but remains therein, while the volatile organic solvent evaporates.

Accordingly, the drying temperature may vary with the particular types of the liquid electrolyte and volatile organic solvent. Particularly, the dispersion may be dried at a range of temperature where the liquid electrolyte does not evaporate and the volatile organic solvent evaporates.

Herein, the substrate may be any one selected from a release film, a porous polymer substrate and an electrode. When the substrate is a release film, the release film is removed from a finished solid-liquid hybrid electrolyte membrane. The release film merely functions as a mold in the manufacture of the solid-liquid hybrid electrolyte membrane. Therefore, when the release film is applied to an electrochemical device, such as a secondary battery, it is removed from the solid-liquid hybrid electrolyte membrane and does not included as a structural element of the electrochemical device. In this manner, it is possible to form a porous structure, which includes solid polymer particles packed therein and a liquid electrolyte introduced to the spaces where the solid polymer particles are in surface contact with one another, through the application and drying of the dispersion.

Then, as shown in FIG. 1(c), the porous structure is pressurized to form a solid-liquid hybrid electrolyte membrane.

Herein, the solid polymer particles and the liquid electrolyte in the porous structure are rearranged through the pressurization to provide a thin-film type electrolyte membrane having a reduced thickness.

Meanwhile, the solid polymer particles are bound physically with one another through the pressurization to provide a hybrid electrolyte membrane having increased binding force. Meanwhile, in the present disclosure, the solid polymer particles have ductility, and require no separate binder polymer. In this manner, it is possible to obtain a solid-liquid hybrid electrolyte membrane showing reduced resistance.

Meanwhile, according to an embodiment of the present disclosure, the liquid electrolyte is present in a small amount after drying the dispersion. Therefore, it is possible to provide a solid-liquid hybrid electrolyte membrane having improved ion conductivity as compared to conventional solid electrolyte membranes. For example, the content of the liquid electrolyte may be 1-20 wt%, based on the total weight of the solid-liquid hybrid electrolyte membrane. More particularly, the content of the liquid electrolyte may be 1 wt% or more, 2 wt% or more, 3 wt% or more, 4 wt% or more, or 5 wt% or more, and 20 wt% or less, 19 wt% or less, 18 wt% or less, 17 wt% or less, or 16 wt% or less, based on the total weight of the solid-liquid hybrid electrolyte membrane. Meanwhile, according to an embodiment of the present disclosure, it is possible to provide a solid-liquid hybrid electrolyte membrane having high ion conductivity, even though the liquid electrolyte is present in a small amount. This is because the liquid electrolyte is dispersed homogeneously on the surfaces of the solid polymer particles, or the portions in which the solid polymer particles are in surface contact with one another.

As described above, after such a small amount of liquid electrolyte is incorporated to the solid-liquid hybrid electrolyte membrane, the solid-liquid hybrid electrolyte membrane may have a porosity of 0-49 vol%, 1-40 vol%, 2-20 vol%, or 5-10 vol%, based on the total volume of the solid polymer particles.

As used herein, the term 'pore' may have various types of pore structures, and any type of pore having an average pore size satisfying the above-defined average pore size, as determined by using porosimetry or as observed through field emission-scanning electron microscopy (FE-SEM), falls within the scope of the present disclosure.

As described above, since the solid-liquid hybrid electrolyte membrane is homogeneously impregnated with a small amount of liquid electrolyte, it is possible to provide the solid-liquid hybrid electrolyte membrane with a high ion conductivity of 10⁻⁴ to 5x10⁻³ S/cm.

According to an embodiment of the present disclosure, the solid-liquid hybrid electrolyte membrane may further include a porous polymer substrate or a non-woven web substrate. Particularly, the solid-liquid hybrid electrolyte membrane according to an embodiment of the present disclosure has a large amount of liquid electrolyte with which it is impregnated. Therefore, when forming the solid-liquid hybrid electrolyte membrane on the porous polymer substrate or the non-woven web substrate, or when a separate porous polymer substrate or non-woven web substrate is inserted, there is an advantage of high mechanical strength. Meanwhile, according to an embodiment of the present disclosure, when the solid-liquid hybrid electrolyte membrane further includes a porous polymer substrate or a non-woven web substrate, the porous polymer substrate or the non-woven web substrate is preferably impregnated with the liquid electrolyte so that the internal pores may be filled with the liquid electrolyte.

Particularly, the non-woven web substrate may include polyolefin, such as polyethylene or polypropylene, polyethylene terephthalate, polyester, polyamide, polyacetal, polycarbonate, polyimide, polyetherether ketone, polyether sulfone, polyphenylene oxide, polyphenylene sulfide, polyethylene naphthalene, or a mixture thereof.

Meanwhile, the solid polymer particles may be partially embedded into the pores of the non-woven substrate. Herein, the surfaces of the solid polymer particles and the substrate may be surrounded with the liquid electrolyte.

Meanwhile, the solid polymer particles may be disposed on at least one surface of the non-woven substrate. Herein, the surfaces of the solid polymer particles and the substrate may be surrounded with the liquid electrolyte.

According to an embodiment of the present disclosure, the solid-liquid hybrid electrolyte membrane is a thin film which may have a thickness of 10-500 µm, 20-300 µm, or 40-100 µm. It is possible to provide a such a thin-film type separator according to an embodiment of the present disclosure, which is advantageous in terms of energy density, when manufacturing a lithium secondary battery subsequently.

Hereinafter, a secondary battery including the solid-liquid hybrid electrolyte membrane according to the present disclosure will be explained. The secondary battery includes a negative electrode, a positive electrode and a solid-liquid hybrid electrolyte membrane interposed between the negative electrode and the positive electrode. Herein, the term 'secondary battery' refers to a system which converts external electrical energy into the form of chemical energy, stores the chemical energy, and then generates electricity as necessary. In general, secondary batteries include lead storage batteries, nickel cadmium batteries (NiCd), nickel metal hydride storage batteries (NiMH), lithium ion batteries, or the like. According to an embodiment of the present disclosure, the secondary battery may be a lithium ion secondary battery.

The positive electrode includes a positive electrode current collector, and a positive electrode active material layer formed on at least one surface of the positive electrode current collector, wherein the positive electrode active material layer includes a positive electrode active material and a conductive material, and may include at least one of a binder resin and a solid electrolyte material. In addition, the positive electrode active material layer may further include various additives in order to supplement or improve the electrochemical properties.

The positive electrode active material layer may have pores formed by vacant spaces among the positive electrode active materials, or the like, and thus may have a porous structure. The positive electrode active material layer may have a porosity of about 12-35 vol%.

The positive electrode active material is not particularly limited, as long as it can be used as a positive electrode active material for a lithium ion secondary battery. Nonlimiting examples of the positive electrode active material may include any one selected from: layered compounds, such as lithium manganese composite oxides (LiMn₂O₄, LiMnO₂, etc.), lithium cobalt oxide (LiCoO₂) and lithium nickel oxide (LiNiO₂), or those compounds substituted with one or more transition metals; lithium manganese oxides such as those represented by the chemical formula of Li₁₊ₓMn₂₋ₓO₄ (wherein x is 0-0.33), LiMnO₃, LiMn₂O₃ and LiMnO₂; lithium copper oxide (Li₂CuO₂); lithium vanadium oxides such as LiV₃O₈, LiV₃O₄, V₂O₅ or Cu₂V₂O₇; Ni-site type lithium nickel oxides represented by the chemical formula of LiNi₁₋ₓMₓO₂ (wherein M is Co, Mn, Al, Cu, Fe, Mg, B or Ga, and x is 0.01-0.3); lithium manganese composite oxides represented by the chemical formula of LiMn₂₋ₓMₓO₂ (wherein M is Co, Ni, Fe, Cr, Zn or Ta, and x is 0.01-0.1), or Li₂Mn₃MO₈ (wherein M is Fe, Co, Ni, Cu or Zn); LiMn₂O₄ in which Li is partially substituted with an alkaline earth metal ion; disulfide compounds; and Fe₂(MoO₄)₃; or a mixture of two or more of them.

Meanwhile, the negative electrode includes a negative electrode current collector, and a negative electrode active material layer formed on at least one surface of the negative electrode current collector, wherein the negative electrode active material layer includes a negative electrode active material and a conductive material, and may include at least one of a binder resin and a solid electrolyte material. In addition, the negative electrode active material layer may further include various additives in order to supplement or improve the electrochemical properties.

The negative electrode active material layer may have pores formed by vacant spaces among the negative electrode active materials, or the like, and thus may have a porous structure. The negative electrode active material layer may have a porosity of about 15-40 vol%.

The negative electrode material may be any negative electrode active material, as long as it can be used as a negative electrode active material for a lithium ion secondary battery. Particular examples of the negative electrode active material include any one selected from: carbon, such as non-graphitizable carbon or graphitic carbon; metal composite oxides such as LiₓFe₂O₃ (0 ≤ x ≤ 1), LiₓWO₂ (0 ≤ x ≤ 1), SnₓMe₁₋ₓMe'_{y}O_{z} (Me: Mn, Fe, Pb or Ge; Me': Al, B, P, Si, an element of Group 1, Group 2 or Group 3 in the Periodic Table, or halogen; 0 < x ≤ 1; 1 ≤ y ≤ 3; 1 ≤ z ≤ 8); lithium metal; lithium alloys; silicon-based alloys; tin-based alloys; metal oxides such as SnO, SnO₂, PbO, PbO₂, Pb₂O₃, Pb₃O₄, Sb₂O₃, Sb₂O₄, Sb₂O₅, GeO, GeO₂, Bi₂O₃, Bi₂O₄, Bi₂O₅, or the like; conductive polymers such as polyacetylene; Li-Co-Ni based materials; titanium oxide; and lithium titanium oxide, or the like; or two or more of them. According to a particular embodiment, the negative electrode active material may include a carbonaceous material and/or Si.

Meanwhile, according to the present disclosure, each of the positive electrode current collector and the negative electrode current collector includes a metal plate having electrical conductivity and may be one selected suitably depending on polarity of electrodes known in the field of secondary batteries.

According to the present disclosure, the conductive material is added generally in an amount of 1-30 wt% based on the total weight of the mixture including the electrode active material. The conductive material is not particularly limited, as long as it causes no chemical change in the corresponding battery and has conductivity. For example, the conductive material include any one selected from: graphite, such as natural graphite or artificial graphite; carbon black, such as carbon black, acetylene black, Ketjen black, channel black, furnace black, lamp black or thermal black; conductive fibers, such as carbon fibers or metallic fibers; metal powder, such as carbon fluoride, aluminum or nickel powder; conductive whisker, such as zinc oxide or potassium titanate; conductive metal oxide, such as titanium oxide; and conductive materials, such as polyphenylene derivatives, or a mixture of two or more of them.

According to the present disclosure, the binder resin is not particularly limited, as long as it is an ingredient which assists binding of the electrode active material with the conductive material, and binding to the current collector. Particular examples of the binder resin include polyvinylidene fluoride, polyvinyl alcohol, carboxymethyl cellulose (CMC), starch, hydroxypropyl cellulose, regenerated cellulose, polyvinyl pyrrolidone, tetrafluoroethylene, polyethylene, polypropylene, ethylene-propylene-diene monomer (EPDM), sulfonated EPDM, styrene butadiene rubber, fluororubber, various copolymers, or the like. In general, the binder resin may be used in an amount of 1-30 wt%, or 1-10 wt%, based on 100 wt% of electrode active material layer.

Meanwhile, according to the present disclosure, each electrode active material layer may include at least one additive, such as an oxidation stabilizing additive, reduction stabilizing additive, flame retardant, heat stabilizer, anti-fogging agent, or the like, if necessary.

The solid electrolyte material may be a solid electrolyte having high reduction stability, preferably. Since the solid electrolyte material mainly functions to conduct lithium ions, any material having a high ion conductivity, such as 10⁻⁵ S/Cm or more, or 10⁻⁴ S/cm or more, may be used, and the solid electrolyte material is not limited to any specific ingredient.

The solid electrolyte material may include at least one of a sulfide-based solid electrolyte material, an oxide-based solid electrolyte material and a polymeric solid electrolyte material.

The polymeric solid electrolyte material may be a polymeric solid electrolyte formed by adding a polymer resin to a solvated electrolyte salt, or a polymer gel electrolyte including a polymer resin impregnated with an organic electrolyte containing an organic solvent and an electrolyte salt, ionic liquid, monomer or oligomer, or the like.

According to an embodiment of the present disclosure, particular examples of the polymeric solid electrolyte may include a polyether polymer, a polycarbonate polymer, an acrylate polymer, a polysiloxane polymer, a phosphazene polymer, a polyethylene derivative, an alkylene oxide derivative, a polyphosphate polymer, polyagitation lysine, polyester sulfide, polyvinyl alcohol, polyvinylidene fluoride, a polymer containing an ionically dissociable group, or the like.

The polymeric solid electrolyte may include a branched copolymer, a comb-like polymer and a crosslinked polymer resin, including polyethylene oxide (PEO) backbone copolymerized with a comonomer including at least one amorphous polymer selected from PMMA, polycarbonate, polydiloxane (pdms) and phosphazene, or a mixture thereof.

In addition, the polymer gel electrolyte includes an organic electrolyte containing an electrolyte salt and a polymer resin, wherein the organic electrolyte is used in an amount of 60-400 parts by weight based on the weight of the polymer resin. The polymer used for the gel electrolyte is not particularly limited, but particular examples thereof include a polyether polymer, PVC polymer, PMMA polymer, polyacrylonitrile (PAN), polyvinylidene fluoride (PVdF), polyvinylidene fluoride-co-hexafluoropropylene (PVdF-HFP), or the like. A mixture of such polymers may also be used.

In addition, the electrolyte salt may be an ionizable lithium salt represented by Li⁺X⁻. Preferably, such a lithium salt may be any one selected from the group consisting of LiTFSI, LiCl, LiBr, LiI, LiClO₄, LiBF₄, LiB₁₀Cl₁₀, LiPF₆, LiAsF₆, LiSbF₆, LiAlCl₄, LiSCN, LiCF₃CO₂, LiCH₃SO₃, LiCF₃SO₃, LiN(SO₂CF₃)₂, LiN(SO₂C₂F₅)₂, LiC₄F₉SO₃, LiC(CF₃SO₂)₃, (CF₃SO₂)·2NLi, lithium chloroborate, lower aliphatic lithium carboxylate, lithium imide 4-phenyl borate and a combination thereof. More preferably, the lithium salt may be LiTFSI (lithium bistrifluoromethanesulfonimide).

According to the present disclosure, the sulfide-based solid electrolyte material contains sulfur (S), has conductivity of metal ions that belong to Group 1 or Group 2 in the Periodic Table, and may include Li-P-S based glass or Li-P-S based glass ceramic. Nonlimiting examples of the sulfide-based solid electrolyte include at least one of Li₂S-P₂S₅, Li₂S-LiI-P₂S₅, Li₂S-LiI-Li₂O-P₂S₅, Li₂S-LiBr-P₂S₅, Li₂S-Li₂O-P₂S₅, Li₂S-Li₃PO₄-P₂S₅, Li₂S-P₂S₅-P₂O₅, Li₂S-P₂S₅-SiS₂, Li₂S-P₂S₅-SnS, Li₂S-P₂S₅-Al₂S₃, Li₂S-GeS₂, Li₂S-GeS₂-ZnS, or the like. However, the scope of the present disclosure is not limited thereto.

In addition, the oxide-based solid electrolyte material contains oxygen (O), has conductivity of metal ions that belong to Group 1 or Group 2 in the Periodic Table. Nonlimiting examples of the oxide-based solid electrolyte include at least one of LLTO based compounds, Li₆La₂CaTa₂O₁₂, Li₆La₂ANb₂O₁₂ (wherein A is Ca or Sr), Li₂Nd₃TeSbO₁₂, Li₃BO_{2.5}N_{0.5}, Li₉SiAlO₈, LAGP based compounds, LATP based compounds, Li₁₊ₓTi_{2- x}AlₓSi_{y}(PO₄)_{3-y} (wherein 0 ≤ x ≤ 1, 0 ≤ y ≤ 1), LiAlₓZr_{2-y}(PO₄)₃ (wherein 0 ≤ x ≤ 1, 0 ≤ y ≤ 1), LiTiₓZr_{2-y}(PO₄)₃ (wherein 0 ≤ x ≤ 1, 0 ≤ y ≤ 1), LISICON based compounds, LIPON based compounds, perovskite based compounds, NASICON based compounds and LLZO based compounds. However, the scope of the present disclosure is not limited thereto.

Meanwhile, the secondary battery according to the present disclosure may be obtained by forming an electrode assembly including one or more negative electrodes, solid-liquid hybrid electrolyte membranes and positive electrodes, stacked successively, and introducing the electrode assembly into a battery casing. The electrode assembly may be provided in any one type of a bi-cell type in which both of the outermost electrodes have different polarities, and a mono-cell type in which both of the outermost electrodes have the same polarity. In addition, the electrode assembly may be prepared in a jelly-roll type, stacked type or a stacked/folded type depending on desired battery characteristics.

According to an embodiment of the present disclosure, the lithium ion battery may be provided in the form of solid-state battery without injecting a liquid electrolyte additionally to the battery casing, except the electrode assembly. Otherwise, a liquid electrolyte may be injected additionally, besides the liquid electrolyte contained in the solid-liquid hybrid electrolyte membrane. Herein, referring to the additionally injected liquid electrolyte, reference will be made about the solid-liquid hybrid electrolyte membrane.

The examples and test examples will now be described. The following examples are for illustrative purposes only and not intended to limit the scope of this disclosure.

### Example 1

First, prepared was a dispersion including powder-type polyphenylene sulfide (average particle diameter: 10 µm) as solid polymer particles dispersed in a liquid electrolyte (ethylene carbonate : ethyl methyl carbonate = 3 : 7 (vol%), LiPF₆ 1 M, vinylene carbonate 0.5 wt%, fluoroethylene carbonate 1 wt%) and acetonitrile as a volatile organic solvent at a weight ratio of 20:40:40.

Next, a separator (polyethylene, thickness 9 µm) was interposed on a release-treated polyethylene terephthalate (PET) film, and 3 mL of the dispersion was applied onto the separator. The resultant structure was dried overnight to obtain a solid-liquid hybrid electrolyte membrane having a thickness of 53 µm. Then, roll pressing was carried out to increase the contact power between particles and/or between particles and the separator and to reduce the thickness, thereby providing a solid-liquid hybrid electrolyte membrane having a thickness of 33 µm. After that, the release-treated polyethylene terephthalate film was removed.

### Example 2

A solid-liquid hybrid electrolyte membrane was obtained in the same manner as Example 1, except that the dispersion had a weight ratio of the ingredients of 20:20:60, the solid-liquid hybrid electrolyte membrane had a thickness of 48 µm after drying and a thickness of 26 µm after roll pressing.

### Example 3

A solid-liquid hybrid electrolyte membrane was obtained in the same manner as Example 2, except that methyl ethyl ketone was used as a volatile organic solvent instead of acetonitrile, the dispersion had a weight ratio of the ingredients of 20:20:60, the solid-liquid hybrid electrolyte membrane had a thickness of 50 µm after drying and a thickness of 28 µm after roll pressing.

### Example 4

A solid-liquid hybrid electrolyte membrane was obtained in the same manner as Example 2, except that the separator was not used during the coating with the dispersion but the dispersion was coated directly on the PET release film, the solid-liquid hybrid electrolyte membrane had a thickness of 235 µm after drying and a thickness of 155 µm after roll pressing.

### Comparative Example 1

An electrolyte membrane was obtained in the same manner as Example 1, except that no volatile organic solvent was introduced during the preparation of the dispersion, and the weight ratio of the solid polymer particles to the liquid electrolyte was 20:80. The resultant product had a thickness of 51 µm after drying, but it was not possible to obtain an electrolyte membrane due to excessively low adhesion between the solid polymer particles during roll pressing.

### Comparative Example 2

An electrolyte membrane was obtained in the same manner as Example 1, except that no volatile organic solvent was introduced during the preparation of the dispersion, and the weight ratio of the solid polymer particles to the liquid electrolyte was 50:50. However, the dispersion had no flowability, and thus could not be coated on the separator.

### Comparative Example 3

An electrolyte membrane was obtained in the same manner as Example 2, except that dimethyl formamide as a non-volatile organic solvent was used instead of acetonitrile as a volatile organic solvent. An electrolyte membrane having a thickness of 47 µm after drying and a thickness of 28 µm after roll pressing was obtained. Herein, the drying condition was vacuum drying at 100°C for 24 hours for the purpose of removing dimethyl formamide.

### Comparative Example 4

Any separator was not used and the dispersion according to Comparative Example 1 was coated directly on a release film. The resultant product had a thickness of 244 µm after drying, but it was not possible to obtain an electrolyte membrane due to excessively low adhesion between particles during roll pressing.

### Comparative Example 5

Polyethylene oxide (PEO, Mw = 4,000,000 g/mol) was dissolved in acetonitrile (AN) as a volatile organic solvent to prepare a polymer solution having a concentration of 4 wt%. Herein, LiTFSI as a lithium salt was added thereto to a molar ratio of [EO]/[Li⁺] of 18/1. The resultant mixture was agitated overnight at 70°C so that PEO and the lithium salt might be dissolved sufficiently in the polymer solution. Next, an additive solution containing an initiator and a curing agent was prepared. The curing agent was polyethylene glycol diacrylate (PEGDA, M_{w} = 575), the initiator was benzoyl peroxide (BPO), PEGDA was used in an amount of 20 wt% based on PEO, BPO was used in an amount of 1 wt% based on PEGDA, and acetonitrile was used as a solvent. The additive solution was agitated for about 1 hour so that the ingredients introduced thereto might be mixed thoroughly. Then, the additive solution was added to the polymer solution and the two solutions were mixed thoroughly. The mixed solution was applied to and coated on a release film by using a doctor blade. The coating gap was set to 300 µm and the coating rate was set to 20 mm/min. The release film coated with the solution was transferred to a glass plate, allowed to maintain level, dried overnight at room temperature, and vacuum dried at 100°C for 12 hours. In this manner, a solid electrolyte membrane was obtained. The resultant solid electrolyte membrane had a thickness of about 50 µm.

### Determination of Ion Conductivity of Solid-Liquid Hybrid Electrolyte Membrane

Each of the solid-liquid hybrid electrolyte membranes according to Examples and Comparative Examples was cut into a circular shape having a size of 1.7671 cm², and the electrolyte membrane was disposed between two stainless steel sheet to obtain a coin-cell. Then, electrochemical impedance was measured by using an analyzer (VMP3, Biologic science instrument) at room temperature under the conditions of an amplitude of 10 mV and a scan range of 500 kHz to 0.1 MHz. Based on this, ion conductivity was calculated.

Herein, the ion conductivity of each Examples 1-4 and Comparative Examples 1-4 was determined at room temperature, and the ion conductivity of Comparative Example 5 was determined at 60°C.

**[Table 1]**

| | Manufacturability | Free-standing | Ion conductivity (S/cm) |
|---|---|---|---|
| Example 1 | O | O | 4.63 X 10⁻⁴ |
| Example 2 | O | O | 1.36 X 10⁻⁴ |
| Example 3 | O | O | 1.66 X 10⁻⁴ |
| Example 4 | O | O | 1.87 X 10⁻⁴ |
| Comp. Ex.1 | Not amenable to roll pressing | - | - |
| Comp. Ex.2 | Not amenable to coating | - | - |
| Comp. Ex.3 | O | O | Cannot be calculated due to low ion conductivity |
| Comp. Ex.4 | Not amenable to roll pressing | - | - |
| Comp. Ex.5 | O | O | 9.95 X 10⁻⁵ |

As can be seen from [Table 1], according to an embodiment of the present disclosure, it is possible to obtain a free-standing type membrane by using a dispersion to which a volatile solvent is added. The dispersion has a reduced concentration to be amenable to coating and a suitable volatile solvent is added to increase the final solid content after coating and to ensure strength, while controlling the ratio of solid phase to liquid phase adequately, and thus the free standing type membrane can be obtained. The solid-liquid hybrid electrolyte membrane according to an embodiment of the present disclosure shows excellent properties, such as physical properties and ion conductivity, as compared to the conventional solid electrolytes exemplified by polyethylene oxide (Comparative Example 5). Particularly, it is possible to obtain a solid-liquid hybrid electrolyte membrane having excellent ion conductivity by using a combination of a structure including particles with an electrolyte through a dispersion coating process. In addition, when introducing a separator, it is possible to obtain a thin film-type electrolyte membrane having a thickness of less than 50 µm.

### [Description of Drawing Numerals]

100: Solid-liquid hybrid electrolyte membrane
11: Solid polymer particles
12: Liquid electrolyte
13: Volatile organic solvent
14: Dispersion
15: Substrate

## Claims

1. A method for manufacturing a solid-liquid hybrid electrolyte membrane, comprising the steps of:
(S1) preparing a dispersion containing a plurality of polymer particles dispersed in a liquid electrolyte and a volatile organic solvent;
(S2) applying the dispersion onto a substrate, followed by drying, to form a porous structure; and
(S3) pressurizing the porous structure to obtain a solid-liquid hybrid electrolyte membrane,
wherein the solid polymer particles in the porous structure are packed, while being in contact with one another, and the porous structure comprises a pore structure formed among the solid polymer particles,
the liquid electrolyte surrounds the inside of the pores of the porous structure, the portions in which the solid polymer particles are in surface contact with one another, or the surfaces of the solid polymer particles,
the content of the liquid electrolyte is 1-20 wt% based on the total weight of the solid-liquid hybrid electrolyte membrane, and
the organic solvent has higher volatility as compared to the liquid electrolyte.

2. The method for manufacturing a solid-liquid hybrid electrolyte membrane according to claim 1, wherein the volatile organic solvent has a boiling point of 30-200°C.

3. The method for manufacturing a solid-liquid hybrid electrolyte membrane according to claim 1, wherein the volatile organic solvent comprises acrylonitrile, methyl ethyl ketone, acetone, tetrahydrofuran, pentane, hexane, benzene, chloroform, diethyl ether, dichloromethane, ethyl acetate, acetonitrile, methanol, methylene chloride, carbon disulfide, carbon tetrachloride, or a mixture of two or more of them.

4. The method for manufacturing a solid-liquid hybrid electrolyte membrane according to claim 1, wherein the solid polymer particle comprises an engineering plastic resin.

5. The method for manufacturing a solid-liquid hybrid electrolyte membrane according to claim 1, wherein the solid polymer particle comprises an engineering plastic resin, and the engineering plastic resin comprises any one selected from polyphenylene sulfide, polyetherether ketone, polyimide, polyamideimide, liquid crystal polymer, polyether imide, polysulfone, polyarylate, polyethylene terephthalate, polybutylene terephthalate, polyoxymethylene, polycarbonate, polypropylene, polyethylene and polymethyl methacrylate, or two or more of them.

6. The method for manufacturing a solid-liquid hybrid electrolyte membrane according to claim 1, wherein the liquid electrolyte comprises at least one of a linear carbonate, a linear ester and a linear ether, as an organic solvent, and a metal cation as a lithium salt.

7. The method for manufacturing a solid-liquid hybrid electrolyte membrane according to claim 1, wherein the weight ratio of the volatile organic solvent to the liquid electrolyte is 83:17-66:34.

8. The method for manufacturing a solid-liquid hybrid electrolyte membrane according to claim 1, wherein the pressurization in step (S3) is a step of allowing the solid polymer particles to be bound physically or chemically with one another to obtain a porous structure having a pore structure formed among the solid polymer particles.

9. The method for manufacturing a solid-liquid hybrid electrolyte membrane according to claim 1, wherein the substrate comprises a porous polymer substrate or a non-woven web substrate.

10. The method for manufacturing a solid-liquid hybrid electrolyte membrane according to claim 9, wherein the pores inside of the substrate are filled with the liquid electrolyte.

11. A solid-liquid hybrid electrolyte membrane obtained by the method as defined in any one of claims 1 to 10, which comprises a plurality of solid polymer particles and a liquid electrolyte,
wherein the solid polymer particles are packed, while being in contact with one another, and comprise a porous structure having a pore structure formed among the solid polymer particles,
the liquid electrolyte surrounds the inside of the pores of the porous structure, the portions in which the solid polymer particles are in surface contact with one another, or the surfaces of the solid polymer particles, and
the content of the liquid electrolyte is 1-20 wt% based on the total weight of the solid-liquid hybrid electrolyte membrane.

12. The solid-liquid hybrid electrolyte membrane according to claim 11, which further comprises a porous polymer substrate or a non-woven web substrate.

13. The solid-liquid hybrid electrolyte membrane according to claim 12, wherein the pores inside of the substrate are filled with the liquid electrolyte.

14. A lithium ion secondary battery comprising a positive electrode, a negative electrode and a solid-liquid hybrid electrolyte membrane interposed between the negative electrode and the positive electrode, wherein the solid-liquid hybrid electrolyte membrane is the same as defined in claim 11, and the negative electrode, the positive electrode or both comprise a solid electrolyte material.

## Patentansprüche

1. Verfahren zur Herstellung einer Fest-Flüssig-Hybridelektrolytmembran, die die folgenden Schritte umfasst:
(S1) Zubereiten einer Dispersion, die eine Vielzahl von Polymerpartikeln, die in einem flüssigen Elektrolyten und einem flüchtigen organischen Lösungsmittel dispergiert sind, enthält;
(S2) Aufbringen der Dispersion auf ein Substrat, gefolgt von dem Trocknen, so dass eine poröse Struktur gebildet wird; und
(S3) Druckbeaufschlagen der porösen Struktur, um eine Fest-Flüssig-Hybridelektrolytmembran zu erhalten,
wobei die festen Polymerpartikel in der porösen Struktur verpackt sind, während sie in Kontakt miteinander stehen, und die poröse Struktur eine unter den festen Polymerpartikeln gebildete Porenstruktur umfasst,
der flüssige Elektrolyt die Innenseite der Poren der porösen Struktur, die Abschnitte, in denen die festen Polymerpartikel miteinander in Oberflächenkontakt stehen, oder die Oberflächen der festen Polymerpartikel umgibt,
der Gehalt des flüssigen Elektrolyten 1-20 Gew.-% auf der Grundlage des Gesamtgewichts der Fest-Flüssig-Hybridelektrolytmembran beträgt, und
das organische Lösungsmittel eine höhere Flüchtigkeit als der flüssige Elektrolyt aufweist.

2. Verfahren zur Herstellung einer Fest-Flüssig-Hybridelektrolytmembran nach Anspruch 1, wobei das flüchtige organische Lösungsmittel einen Siedepunkt von 30-200 °C aufweist.

3. Verfahren zur Herstellung einer Fest-Flüssig-Hybridelektrolytmembran nach Anspruch 1, wobei das flüchtige organische Lösungsmittel Acrylnitril, Methylethylketon, Aceton, Tetrahydrofuran, Pentan, Hexan, Benzol, Chloroform, Diethylether, Dichlormethan, Ethylacetat, Acetonitril, Methanol, Methylenchlorid, Kohlenstoffdisulfid, Kohlenstofftetrachlorid oder eine Mischung aus zwei oder mehr davon umfasst.

4. Verfahren zur Herstellung einer Fest-Flüssig-Hybridelektrolytmembran nach Anspruch 1, wobei das feste Polymerpartikel ein technisches Kunststoffharz umfasst.

5. Verfahren zur Herstellung einer Fest-Flüssig-Hybridelektrolytmembran nach Anspruch 1, wobei das feste Polymerpartikel ein technisches Kunststoffharz umfasst, und das technische Kunststoffharz eine oder zwei oder mehrere der Folgenden umfasst, ausgewählt aus: Polyphenylensulfid, Polyetheretherketon, Polyimid, Polyamidimid, Flüssigkristallpolymer, Polyetherimid, Polysulfon, Polyarylat, Polyethylenterephthalat, Polybutylenterephthalat, Polyoxymethylen, Polycarbonat, Polypropylen, Polyethylen und Polymethylmethacrylat.

6. Verfahren zur Herstellung einer Fest-Flüssig-Hybridelektrolytmembran nach Anspruch 1, wobei der flüssige Elektrolyt mindestens eines aus einem linearen Carbonat, einem linearen Ester und einem linearen Ether als organisches Lösungsmittel und einem Metallkation als Lithiumsalz umfasst.

7. Verfahren zur Herstellung einer Fest-Flüssig-Hybridelektrolytmembran nach Anspruch 1, wobei das Gewichtsverhältnis des flüchtigen organischen Lösungsmittels zu dem flüssigen Elektrolyten 83:17-66:34 beträgt.

8. Verfahren zur Herstellung einer Fest-Flüssig-Hybridelektrolytmembran nach Anspruch 1, wobei das Druckbeaufschlagen in Schritt (S3) ein Schritt ist, bei dem die festen Polymerpartikel physikalisch oder chemisch miteinander gebunden werden können, um eine poröse Struktur zu erhalten, die eine Porenstruktur aufweist, die unter den festen Polymerpartikeln gebildet ist.

9. Verfahren zur Herstellung einer Fest-Flüssig-Hybridelektrolytmembran nach Anspruch 1, wobei das Substrat ein poröses Polymersubstrat oder ein Vliesstoffsubstrat umfasst.

10. Verfahren zur Herstellung einer Fest-Flüssig-Hybridelektrolytmembran nach Anspruch 9, wobei die Poren in dem Inneren des Substrats mit dem flüssigen Elektrolyten gefüllt sind.

11. Fest-Flüssig-Hybridelektrolytmembran, die durch das Verfahren nach einem der Ansprüche 1 bis 10 erhalten wird, die eine Vielzahl von festen Polymerpartikeln und einen flüssigen Elektrolyten umfasst,
wobei die festen Polymerpartikel verpackt sind, während sie in Kontakt miteinander stehen, und eine poröse Struktur umfassen, die eine Porenstruktur aufweist, die unter den festen Polymerpartikeln gebildet ist,
der flüssige Elektrolyt die Innenseite der Poren der porösen Struktur, die Abschnitte, in denen die festen Polymerpartikel miteinander in Oberflächenkontakt stehen, oder die Oberflächen der festen Polymerpartikel umgibt, und
der Gehalt des flüssigen Elektrolyten 1-20 Gew.-% auf der Grundlage des Gesamtgewichts der Fest-Flüssig-Hybridelektrolytmembran beträgt.

12. Fest-Flüssig-Hybridelektrolytmembran nach Anspruch 11, die weiter ein poröses Polymersubstrat oder ein Vliesstoffsubstrat umfasst.

13. Fest-Flüssig-Hybridelektrolytmembran nach Anspruch 12, wobei die Poren in dem Inneren des Substrats mit dem flüssigen Elektrolyten gefüllt sind.

14. Lithium-Ionen-Sekundärbatterie, die eine positive Elektrode, eine negative Elektrode und eine Fest-Flüssig-Hybridelektrolytmembran umfasst, die zwischen die negative Elektrode und die positive Elektrode eingefügt ist, wobei die Fest-Flüssig-Hybridelektrolytmembran dieselbe ist wie in Anspruch 11 definiert, und die negative Elektrode, die positive Elektrode oder beides ein festes Elektrolytmaterial umfassen.

## Revendications

1. Procédé de fabrication d'une membrane électrolytique hybride solide-liquide, comprenant les étapes suivantes :
(S1) la préparation d'une dispersion contenant une pluralité de particules polymères dispersées dans un électrolyte liquide et un solvant organique volatil ;
(S2) l'application de la dispersion sur un substrat, suivie d'un séchage, pour former une structure poreuse ; et
(S3) la mise sous pression de la structure poreuse pour obtenir une membrane électrolytique hybride solide-liquide,
dans lequel les particules polymères solides dans la structure poreuse sont compactées, tout en étant en contact les unes avec les autres, et la structure poreuse comprend une structure de pores formée parmi les particules polymères solides,
l'électrolyte liquide entoure l'intérieur des pores de la structure poreuse, les portions dans lesquelles les particules polymères solides sont en contact de surface les unes avec les autres ou les surfaces des particules polymères solides,
la teneur en électrolyte liquide est de 1 à 20 % en poids par rapport au poids total de la membrane électrolytique hybride solide-liquide, et
le solvant organique présente une volatilité supérieure à celle de l'électrolyte liquide.

2. Procédé de fabrication d'une membrane électrolytique hybride solide-liquide selon la revendication 1, dans lequel le solvant organique volatil présente un point d'ébullition de 30-200 °C.

3. Procédé de fabrication d'une membrane électrolytique hybride solide-liquide selon la revendication 1, dans lequel le solvant organique volatil comprend de l'acrylonitrile, de la méthyléthylcétone, de l'acétone, du tétrahydrofurane, du pentane, de l'hexane, du benzène, du chloroforme, de l'éther diéthylique, du dichlorométhane, de l'acétate d'éthyle, de l'acétonitrile, du méthanol, du chlorure de méthylène, du disulfure de carbone, du tétrachlorure de carbone ou un mélange de deux ou plus de ceux-ci.

4. Procédé de fabrication d'une membrane électrolytique hybride solide-liquide selon la revendication 1, dans lequel la particule polymère solide comprend une résine plastique d'ingénierie.

5. Procédé de fabrication d'une membrane électrolytique hybride solide-liquide selon la revendication 1, dans lequel la particule polymère solide comprend une résine plastique d'ingénierie, et la résine plastique d'ingénierie comprend un quelconque sélectionné parmi le sulfure de polyphénylène, la polyétheréthercétone, le polyimide, le polyamideimide, le polymère à cristaux liquides, le polyétherimide, le polysulfone, le polyarylate, le polyéthylène téréphtalate, le polybutylène téréphtalate, le polyoxyméthylène, le polycarbonate, le polypropylène, le polyéthylène et le polyméthacrylate de méthyle, ou deux ou plus de ceux-ci.

6. Procédé de fabrication d'une membrane électrolytique hybride solide-liquide selon la revendication 1, dans lequel l'électrolyte liquide comprend au moins l'un parmi un carbonate linéaire, un ester linéaire et un éther linéaire, en tant que solvant organique, et un cation métallique en tant que sel de lithium.

7. Procédé de fabrication d'une membrane électrolytique hybride solide-liquide selon la revendication 1, dans lequel le rapport pondéral entre le solvant organique volatil et l'électrolyte liquide est de 83:17 à 66:34.

8. Procédé de fabrication d'une membrane électrolytique hybride solide-liquide selon la revendication 1, dans lequel la mise sous pression à l'étape (S3) est une étape permettant aux particules polymères solides d'être liées physiquement ou chimiquement les unes aux autres pour obtenir une structure poreuse présentant une structure de pores formée parmi les particules polymères solides.

9. Procédé de fabrication d'une membrane électrolytique hybride solide-liquide selon la revendication 1, dans lequel le substrat comprend un substrat polymère poreux ou un substrat de bande non tissée.

10. Procédé de fabrication d'une membrane électrolytique hybride solide-liquide selon la revendication 9, dans lequel les pores se situant à l'intérieur du substrat sont remplis d'électrolyte liquide.

11. Membrane électrolytique hybride solide-liquide obtenue par le procédé selon l'une quelconque des revendications 1 à 10, qui comprend une pluralité de particules polymères solides et un électrolyte liquide,
dans laquelle les particules polymères solides sont compactées, tout en étant en contact les unes avec les autres, et comprennent une structure poreuse présentant une structure poreuse formée parmi les particules polymères solides,
l'électrolyte liquide entoure l'intérieur des pores de la structure poreuse, les portions dans lesquelles les particules polymères solides sont en contact de surface les unes avec les autres ou les surfaces des particules polymères solides, et
la teneur en électrolyte liquide est de 1 à 20 % en poids par rapport au poids total de la membrane électrolytique hybride solide-liquide.

12. Membrane électrolytique hybride solide-liquide selon la revendication 11, qui comprend en outre un substrat polymère poreux ou un substrat de bande non tissée.

13. Membrane électrolytique hybride solide-liquide selon la revendication 12, dans laquelle les pores se situant à l'intérieur du substrat sont remplis d'électrolyte liquide.

14. Batterie secondaire au lithium-ion comprenant une électrode positive, une électrode négative et une membrane électrolytique hybride solide-liquide interposée entre l'électrode négative et l'électrode positive, dans laquelle la membrane électrolytique hybride solide-liquide est la même que celle définie dans la revendication 11, et l'électrode négative, l'électrode positive ou les deux comprennent un matériau électrolytique solide.
